# FASCICULE DE BREVET EUROPEEN

(11) **EP 2 636 033 B1**
(45) Date de publication et mention de la délivrance du brevet: **22.07.2015**
(21) Numéro de dépôt: 11784419.1
(22) Date de dépôt: 02.11.2011
(51) Int. Cl.: G09B 23/28, G09B 23/30

(54) **SIMULATEUR DESTINE A L'APPRENTISSAGE DE L'INTUBATION TRACHEALE**
SIMULATOR ZUM LERNEN DER TRACHEALEN INTUBATION
SIMULATOR FOR LEARNING TRACHEAL INTUBATION

(30) Priorité: 02.11.2010 FR 1004291
(43) Date de publication de la demande: 11.09.2013
(73) Titulaire: Assistance Publique Hôpitaux de Marseille, 13354 Marseille Cedex 5 (FR); Université d'Aix Marseille, 13284 Marseille Cedex 07 (FR)
(72) Inventeur: SIMEONI, Umberto, F-13008 Marseille (FR); FOUCQUETEAU, Philippe, F-13012 Marseille (FR)
(74) Mandataire: Barbot, Willy
(86) Numéro de dépôt international: PCT/EP2011/005517
(87) Numéro de publication internationale: WO 2012/059218

(56) Documents cités:
- EP-A1- 0 094 029
- WO-A2-2004/098387
- WO-A2-2006/110291
- US-A1- 2009 162 820

## Description

La présente invention concerne un simulateur destiné à l'apprentissage de l'intubation trachéale, et plus particulièrement un tel simulateur comprenant
- un élément de mannequin anatomique reproduisant au moins une cavité buccale munie d'une langue, d'une épiglotte et du sillon glosso-épiglottique correspondant,
- un système de simulation apte à déterminer la valeur d'au moins un paramètre physiologique d'un patient soumis à une intubation trachéale en fonction de données fournies en entrée dudit système et à communiquer cette valeur à un utilisateur.

On sait que l'intubation trachéale, à savoir l'introduction d'un tube dans la trachée d'un patient à des fins notamment de réanimation médicale, implique le recours à un laryngoscope, permettant d'exposer la glotte à la vue, la glotte étant l'orifice du larynx dans lequel doit être introduit le tube trachéal. Cette exposition à la vue est rendue possible grâce à l'alignement sans obstacle visuel, de l'oeil de l'opérateur et de la glotte, permis par l'introduction de la lame du laryngoscope et son bon positionnement dans le pharynx.

A cet effet, la lame du laryngoscope est introduite dans la cavité buccale du patient et son extrémité est appliquée à la base de la langue dans le sillon glosso-épiglottique (vallécule). Cette lame est utilisée comme un écarteur des structures musculaires gênant l'accès au larynx, en particulier la langue du patient.

L'intubation trachéale est un geste agressif, mal toléré par le patient, et doit être réalisé avec rapidité et délicatesse par l'opérateur. Les voies aériennes sont partiellement obstruées durant la manoeuvre, et le patient ressent une gêne respiratoire temporaire. De plus une douleur peut être ressentie, des mouvements-réflexes des muscles du pharynx et du larynx et des réflexes nauséeux peuvent alors être provoqués en retour par la manoeuvre. L'appui exagéré de la lame du laryngoscope dans le sillon glosso-épiglottique, en particulier si le mouvement destiné à l'exposition de la glotte par la lame du laryngoscope n'est pas réalisé dans la bonne direction, entraîne un ralentissement réflexe de la fréquence cardiaque et un défaut d'oxygénation systémique chez le patient.

Cette mauvaise tolérance de l'intubation trachéale par le patient et l'altération consécutive de certaines de ses fonctions et constantes vitales (fréquence cardiaque et oxygénation sanguine), alors que ces dernières sont fragilisées par l'état pathologique rendant nécessaire l'intervention, rendent donc nécessaires un apprentissage préalable et répété des opérateurs qui auront à pratiquer ce geste.

Un tel apprentissage pouvant difficilement être réalisé sur des patients, on a déjà proposé de l'effectuer sur un mannequin anatomique.

Toutefois, les mannequins actuels ne permettent pas à l'opérateur de constater en temps réel la qualité et la tolérance physiologique de son intervention, et d'éventuellement la corriger tout en vérifiant au fur et à mesure l'efficacité de la correction.

A cet effet, la demande de brevet EP 0 094 029 décrit un simulateur d'intubation trachéale comprenant une tête de mannequin fixée à un support, dont la face est à l'opposé de ce support, laquelle tête se compose d'un crâne comprenant une mâchoire inférieure mobile et d'un cou connecté à ce support et à ce crâne de telle manière que la tête du mannequin puisse être inclinée vers l'avant et vers l'arrière, caractérisé en ce que la cavité buccale et la gorge de la tête du mannequin sont composées d'un élément en forme d'entonnoir à paroi mince comprenant un matériau hautement élastique, ledit élément en forme d'entonnoir ayant à son bord supérieur avant une languette bombée, élément comportant une partie avant qui est fixée de manière permanente à l'intérieur de la mâchoire inférieure mobile, et, à son bord arrière des moyens pour fixer l'élément en forme d'entonnoir à la partie inférieure du crâne, la partie inférieure dudit élément en forme d'entonnoir comprenant un conduit de réception de section transversale sensiblement circulaire et étant relié à une extrémité d'un tube non repliable, qui à son extrémité opposée est articulée sur le support et un conduit arrière de section transversale de forme sensiblement ovale, un rabat s'étendant à partir de la surface intérieure de l'élément en forme d'entonnoir et ayant la forme analogue à celle de l'épiglotte étant prévus dans la zone adjacente à l'entrée du conduit d' entrée.

L'invention vise à pallier ces inconvénients.

Plus particulièrement, l'invention a pour but de fournir un simulateur destiné à l'apprentissage de l'intubation trachéale, qui permette à l'opérateur de vérifier en temps réel la qualité et la tolérance physiologique de son intervention.

L'invention a également pour but de fournir un procédé de mise en oeuvre de ce simulateur

A cet effet, l'invention a tout d'abord pour objet un simulateur destiné à l'apprentissage de l'intubation trachéale comprenant
- un élément de mannequin anatomique reproduisant au moins une cavité buccale munie d'une langue, d'une épiglotte et du sillon glosso-épiglottique correspondant,
- un système de simulation apte à déterminer au moins un paramètre physiologique d'un patient soumis à une intubation trachéale en fonction de données fournies en entrée dudit système et à communiquer ce paramètre en temps réel par l'intermédiaire d'un transducteur, à un opérateur pratiquant une intubation trachéale sur ledit élément de mannequin anatomique, ce simulateur comprenant en outre
- au moins un capteur d'effort disposé sur l'élément de mannequin au niveau du sillon glosso-épiglottique de manière à mesurer la force appliquée à ce niveau par la lame d'un laryngoscope manié par l'opérateur, et
- des moyens de transmission pour fournir la valeur de la mesure effectuée par ledit capteur d'effort en entrée dudit système de simulation,
le système de simulation étant agencé pour prendre en compte ladite valeur de la mesure effectuée par le capteur d'effort pour déterminer ledit paramètre physiologique.

Dans un mode de réalisation particulier, le système de simulation est agencé pour prendre en compte la durée pendant laquelle la force est appliquée.

Le dispositif permet ainsi de reproduire l'une des difficultés rencontrées dans la réalité de la réanimation médicale lors de l'intubation trachéale : la mauvaise tolérance de ce geste par le patient et l'altération consécutive de certaines de ses fonctions et constantes vitales, par exemple la fréquence cardiaque et l'oxygénation sanguine, alors qu'elles sont fragilisées par l'état pathologique rendant nécessaire l'intubation trachéale, notamment lorsque ce geste n'est pas réalisé de façon optimale en termes de durée et de qualité d'opération technique.

Avantageusement, l'élément de mannequin anatomique (1) reproduit un enfant, de préférence l'élément de mannequin anatomique (1) reproduit un nourrisson.

Egalement dans un mode de réalisation particulier, le système de simulation est agencé pour prendre en compte l'intensité de la force appliquée.

Egalement dans un mode de réalisation particulier, la représentation de l'évolution dans le temps dudit au moins un paramètre physiologique constitue la simulation de l'électrocardiogramme dudit patient.

Le système de simulation est par exemple agencé de manière que ledit électrocardiogramme présente une valeur de référence de la fréquence cardiaque, par exemple de 125 (±15) cycles par minute, cette valeur de référence diminuant de préférence dans le temps de 5 cycles par minute toutes les 30 secondes.

Plus particulièrement, ledit transducteur peut comprendre au moins un moniteur apte à afficher ledit électrocardiogramme.

Les moyens de simulation peuvent également être agencés pour simuler une diminution de la fréquence cardiaque en fonction de la durée pendant laquelle la force est appliquée. A noter que l'obtention d'une fréquence cardiaque nulle marque la fin de la simulation.

Plus particulièrement, les moyens de simulation sont agencés pour simuler une diminution progressive de la fréquence cardiaque de :
- 10 cycles par minute en l'espace de 30 secondes en réponse à la détection d'une force appliquée en continu sur la période, ladite force appliquée en continu étant supérieure à un seuil paramétrable ;
- 35 cycles par minute en l'espace de 10 secondes en réponse à la détection d'une force d'intensité croissante appliquée en continu sur la période, ladite force appliquée étant supérieure audit seuil paramétrable et présentant une augmentation de son intensité comprise entre au moins 5 et au moins 40%, de préférence une augmentation de son intensité d'au moins 30% ;
- 55 cycles par minute en l'espace de 20 secondes en réponse à la détection d'une force d'intensité croissante appliquée en continu sur la période, ladite force appliquée étant supérieure audit seuil paramétrable et présentant une augmentation de son intensité comprise entre au moins 40 et au moins 80%, de préférence une augmentation de son intensité d'au moins 60% ;
- 75 cycles par minute en l'espace de plus de 20 secondes en réponse à la détection d'une force d'intensité croissante appliquée en continu sur la période, ladite force appliquée étant supérieure audit seuil paramétrable et présentant une augmentation de son intensité comprise entre au moins 80% et au moins 150%, de préférence une augmentation de son intensité d'au moins 100%.

Il est toutefois entendu que l'ensemble de ces valeurs sont paramétrables.

Avantageusement, ledit seuil paramétrable correspond à une pression exercée au niveau du capteur d'effort disposé sur l'élément de mannequin au niveau du sillon glosso-épiglottique qui est supérieure ou égale à 10 N/cm², de préférence supérieure ou égale à 20 N/cm² et, de manière particulièrement préférée supérieure ou égale à 50 N/cm².

Dans un mode de réalisation, les moyens de simulation sont agencés pour simuler un retour à une fréquence cardiaque normale, dès lors qu'aucune force n'est plus appliquée sur le capteur d'effort, de préférence dès lors que la force appliquée est inférieure au seuil paramétrable. Avantageusement, ce retour à la normale s'effectue selon les lois inverses de celles définies précédemment pour la diminution de la fréquence cardiaque en fonction de l'intensité de la force appliquée et de l'augmentation de cette dernière.

Egalement dans un mode de réalisation particulier, ledit au moins un paramètre physiologique est la saturation de l'hémoglobine en oxygène dudit patient.

Le système de simulation est par exemple agencé de manière que ladite saturation de l'hémoglobine en oxygène présente une valeur de référence de 94 (±4) %, cette valeur de référence diminuant de préférence dans le temps de 3% toutes les 30 secondes.

Plus particulièrement, les moyens de simulation peuvent être agencés pour simuler une diminution de la saturation de l' hémoglobine en oxygène en fonction de la durée pendant laquelle la force est appliquée.

Les moyens de simulation peuvent notamment être agencés pour simuler une diminution de la saturation de l'hémoglobine en oxygène en fonction de l'intensité de la force appliquée. A noter que l'obtention d'une valeur de saturation de l'hémoglobine en oxygène nulle marque la fin de la simulation.

Ledit transducteur peut également comprendre des moyens acoustiques, la valeur de la saturation de l' hémoglobine en oxygène étant communiquée à l'opérateur sous la forme d'un signal sonore dont la fréquence est fonction de ladite valeur.

Plus particulièrement, les moyens de simulation peuvent être agencés pour simuler une diminution de la saturation de l' hémoglobine en oxygène de :
- 6% en l'espace de 30 secondes en réponse à la détection d'une force appliquée en continu sur la période, ladite force appliquée en continu étant supérieure à un seuil paramétrable ;
- 20 (±4) % en l'espace de 10 secondes en réponse à la détection d'une force d'intensité croissante appliquée en continu sur la période, ladite force appliquée étant supérieure audit seuil paramétrable et présentant une augmentation de son intensité comprise entre au moins 5 et au moins 40%, de préférence une augmentation de son intensité d'au moins 30% ;
- 29 (±4) % en l'espace de 20 secondes, ces données étant paramétrables, en réponse à la détection d'une force d'intensité croissante appliquée en continu sur la période, ladite force appliquée étant supérieure audit seuil paramétrable et présentant une augmentation de son intensité comprise entre au moins 40 et au moins 80%, de préférence une augmentation de son intensité d'au moins 60% ;
- 38 (±4) % en l'espace de plus de 20 secondes, données paramétrables, en réponse à la détection d'une force d'intensité croissante appliquée en continu sur la période, ladite force appliquée étant supérieure audit seuil paramétrable et présentant une augmentation de son intensité comprise entre au moins 80% et au moins 150%, de préférence une augmentation de son intensité d'au moins 100%.

Les moyens de simulation peuvent également être agencés pour simuler un retour à une saturation de l'hémoglobine en oxygène normale dès lors qu'aucune force n'est plus appliquée sur le capteur d'effort, de préférence dès lors que la force appliquée est inférieure au seuil paramétrable. Avantageusement, ce retour à la normale s'effectue selon les lois inverses de celles définies précédemment pour la diminution de la fréquence cardiaque en fonction de l'intensité de la force appliquée et de l'augmentation de cette dernière.

L'invention a également pour objet un procédé de mise en oeuvre du simulateur décrit ci-dessus, comprenant les étapes consistant à
- fixer une valeur de référence pour ledit au moins un paramètre physiologique,
- enregistrer la valeur de la mesure effectuée par le capteur d'effort,
- incrémenter cycliquement ledit paramètre physiologique à partir de ladite valeur de référence en fonction de la mesure effectuée par le capteur d'effort,
- communiquer en temps réel à l'opérateur le paramètre incrémenté, par l'intermédiaire dudit transducteur.

Dans un mode de mise en oeuvre particulier, le procédé comprend en outre l'étape consistant à incrémenter cycliquement ledit paramètre physiologique en fonction de la durée de l'intubation trachéale.

On décrira maintenant, à titre d'exemple non limitatif, un mode de réalisation de l'invention en référence aux dessins schématiques annexés dans lesquels :
- la figure 1 est une représentation schématique d'un mannequin anatomique utilisé dans un simulateur selon l'invention,
- la figure 2 est une vue à grande échelle d'un détail de la figure 1, et
- la figure 3 est un organigramme d'un système de simulation apte à mettre en oeuvre le procédé selon l'invention.

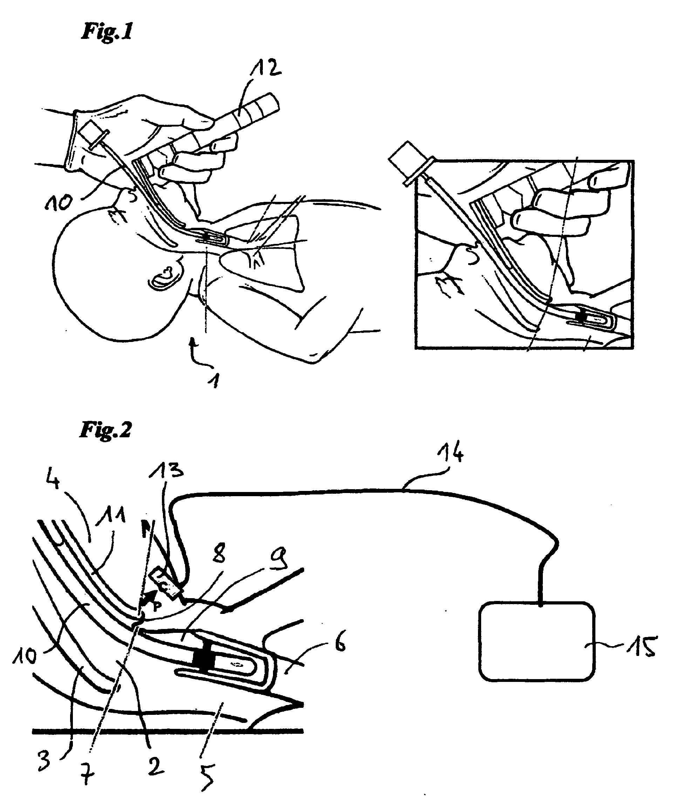

On voit aux figures 1 et 2 un mannequin anatomique 1 constitué pour l'essentiel d'un buste dans lequel est formée une cavité buccale 2 délimitée pour l'essentiel par le palais 3 et la langue 4. On voit par ailleurs également l'aesophage 5 et la trachée 6, ainsi que l'épiglotte 7 formée à la racine de la langue 4. La langue 4 et l'épiglotte 7 délimitent entre elles le sillon glosso-épiglottique ou vallécule 8. La trachée débouche dans la cavité buccale par un orifice 9 constituant la glotte.

Le mannequin anatomique qui vient d'être décrit a pour but de faciliter l'apprentissage de l'intubation trachéale.

L'intubation trachéale consiste à introduire un tube trachéal 10 dans la glotte 9 du patient. A cet effet, la glotte doit être exposée à la vue de l'opérateur, ce qui rend nécessaire d'aligner visuellement l'oeil de l'opérateur et la glotte. Ceci est réalisé à l'aide de la lame 11 d'un laryngoscope 12.

A cet effet, l'extrémité de la lame 11 est appliquée au fond du sillon glosso-épiglottique 8 et cette lame est pressée vers le haut par l'opérateur (dans la direction orientée vers le bas, à l'opposé du palais, lorsque le patient est en position debout). C'est cette opération qui provoque les réactions physiologiques décrites ci-dessus.

Selon l'invention, un capteur d'effort 13 est disposé sur le mannequin 1 au niveau du sillon glosso-épiglottique 8, sous la racine de la langue de manière à être sensible à la force appliquée par la lame 11 du laryngoscope 12 (on parlera ci-après indifféremment de la force appliquée ou de la pression exercée par la lame 11). Un conducteur électrique 14 permet de transmettre le résultat de la mesure effectuée par le capteur 13 à un microordinateur 15 comprenant au moins de moyens de traitement de données, un moniteur vidéo destiné à afficher une simulation d'électrocardiogramme fonction des mesures effectuées par le capteur 13 et un haut-parleur destiné à émettre un son également fonction d'une des mesures effectuées par le capteur 13 et représentatif d'une simulation de saturation de l'hémoglobine en oxygène.

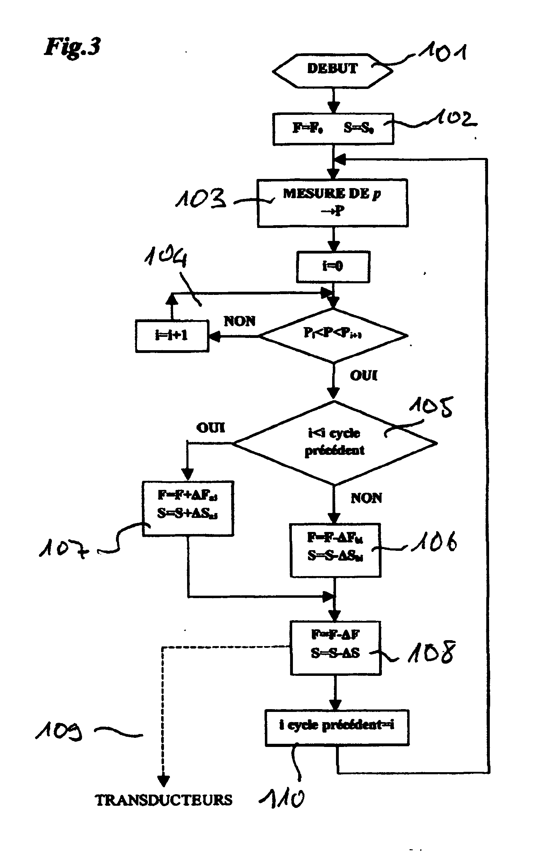

On a décrit ci-dessus un algorithme de dérivation de la fréquence cardiaque F et de la saturation de l'hémoglobine en oxygène S de la simulation. On en donnera ici une variante en référence à la figure 3.

On définit en premier lieu, pour les mesures effectuées par le capteur 13, un ensemble de gammes de pression [Pᵢ, Pᵢ₊₁], à partir d'un premier seuil de pression Po. On fixe également une fréquence cardiaque de référence Fo et une saturation de l'hémoglobine en oxygène de référence S₀, ainsi que des incréments liés à la durée, ΔF pour la fréquence cardiaque et ΔS pour la saturation de l'hémoglobine en oxygène. Pour chaque gamme de pression [Pᵢ, Pᵢ₊₁], on fixe en outre un incrément positif ΔFₐᵢ et un incrément négatif ΔF_{bi} pour la fréquence cardiaque et un incrément positif ΔSₐᵢ et un incrément négatif ΔS_{bi} pour la saturation de l'hémoglobine en oxygène.

Au début de la simulation (101), on fixe las valeurs de F et de S à F₀ et S₀ (102). On acquiert ensuite une valeur P de la mesure p effectuée par le capteur 13 (103).

La boucle 104 permet de déterminer dans quelle gamme de pression [Pᵢ, Pᵢ₊₁] se trouve la valeur actuelle de P.

Le test suivant 105 vise à déterminer si la pression exercée par le laryngoscope a augmenté ou diminué. Si la pression est restée stable ou a augmenté, F et S sont incrémentées négativement de ΔF_{bi} et ΔS_{bi} (106) respectivement (la fréquence cardiaque et saturation de l'hémoglobine en oxygène diminuent). Si, au contraire, la pression a diminué, F et S sont incrémentées positivement de ΔFₐᵢ et ΔSₐᵢ (107) respectivement (la fréquence cardiaque et saturation de l'hémoglobine en oxygène augmentent).

Les étapes 105, 106 et 107 simulent donc la qualité de l'intervention.

En outre, quelle que soit cette qualité, on incrémente négativement F et S de ΔF et ΔS à chaque cycle (108) afin de tenir compte des effets de la durée de l'intervention. Des dispositions convenables sont prises pour assurer la constance de la durée des cycles.

On peut de plus prévoir des variations aléatoires de F et de S.

Les valeurs actualisées de F et S sont communiquées aux transducteurs (moniteur et haut-parleur) en 109.

Enfin, la gamme de pression [Pi, Pᵢ₊₁] dans laquelle se trouve P est mémorisée en 110 afin de déterminer au cycle suivant comment la pression exercée a évolué, et un nouveau cycle est entamé.

Le logiciel du microordinateur 15 simule sur le moniteur un électrocardiogramme à la fréquence F déterminée comme précédemment. Par ailleurs, il pilote le haut-parleur de manière que celui-ci émette une succession de bips au rythme des battements cardiaque et dont la tonalité, grave ou aigüe est fonction de S.

## Revendications

1. Simulateur destiné à l'apprentissage de l'intubation trachéale comprenant
- un élément de mannequin anatomique (1) reproduisant au moins une cavité buccale (2) munie d'une langue (4), d'une épiglotte (7) et du sillon glosso-épiglottique correspondant (8),
- un système de simulation (15) apte à déterminer au moins un paramètre physiologique d'un patient soumis à une intubation trachéale en fonction de données fournies en entrée dudit système et à communiquer ce paramètre en temps réel par l'intermédiaire d'un transducteur (15), à un opérateur pratiquant une intubation trachéale sur ledit élément de mannequin anatomique,
***caractérisé par le fait* qu'**il comprend
- au moins un capteur d'effort (13) disposé sur l'élément de mannequin au niveau du sillon glosso-épiglottique de manière à mesurer la force appliquée à ce niveau par la lame (11) d'un laryngoscope (12) manié par l'opérateur, et
- des moyens de transmission (14) pour fournir la valeur de la mesure effectuée par ledit capteur d'effort en entrée dudit système de simulation,
***et par le fait* que** le système de simulation est agencé pour prendre en compte ladite valeur de la mesure effectuée par le capteur d'effort pour déterminer ledit paramètre physiologique.

2. Simulateur selon la revendication 1, dans lequel l'élément de mannequin anatomique (1) reproduit un enfant, de préférence l'élément de mannequin anatomique (1) reproduit un nourrisson.

3. Simulateur selon l'une quelconque des revendications 1 ou 2, dans lequel le système de simulation est agencé pour prendre en compte la durée pendant laquelle la force est appliquée et/ou l'intensité de la force appliquée.

4. Simulateur selon la revendication 3, dans lequel ledit au moins un paramètre biologique correspond à la fréquence cardiaque et les moyens de simulation sont agencés pour simuler une diminution de ladite fréquence cardiaque en fonction de la durée pendant laquelle la force est appliquée et/ou de l'intensité de la force appliquée; l'obtention d'une fréquence cardiaque nulle marquant la fin de la simulation.

5. Simulateur selon la revendication précédente dans lequel les moyens de simulation sont agencés pour simuler une diminution progressive de la fréquence cardiaque de :
- 10 cycles par minute en l'espace de 30 secondes en réponse à la détection d'une force appliquée en continu sur la période, ladite force appliquée en continu sur la période étant supérieure à un seuil paramétrable ;
- 35 cycles par minute en l'espace de 10 secondes en réponse à la détection d'une force d'intensité croissante appliquée en continu sur la période, ladite force appliquée sur la période étant supérieure audit seuil paramétrable et présentant une augmentation de son intensité comprise entre au moins 5% et au moins 40%, de préférence une augmentation de son intensité d'au moins 30%;
- 55 cycles par minute en l'espace de 20 secondes en réponse à la détection d'une force d'intensité croissante appliquée en continu sur la période, ladite force appliquée sur la période étant supérieure audit seuil paramétrable et présentant une augmentation de son intensité comprise entre au moins 40% et au moins 80%, de préférence une augmentation de son intensité d'au moins 60% ;
- 75 cycles par minute en l'espace de plus de 20 secondes en réponse à la détection d'une force d'intensité croissante appliquée en continu sur la période, ladite force appliquée en continu sur la période étant supérieure audit seuil paramétrable et présentant une augmentation de son intensité comprise entre au moins 80% et au moins 150%, de préférence une augmentation de son intensité d'au moins 100%.

6. Simulateur selon la revendication 3, dans lequel ledit au moins un paramètre biologique correspond à la saturation de l'hémoglobine en oxygène dudit patient et les moyens de simulation sont agencés pour simuler une diminution de saturation de l'hémoglobine en oxygène en fonction de la durée pendant laquelle la force est appliquée et/ou de l'intensité de la force appliquée; l'obtention d'une saturation de l'hémoglobine en oxygène nulle marquant la fin de la simulation.

7. Simulateur selon la revendication précédente dans lequel les moyens de simulation sont agencés pour simuler une diminution progressive de la saturation de l'hémoglobine en oxygène de :
- 6% en l'espace de 30 secondes en réponse à la détection d'une force appliquée en continu sur la période, ladite force appliquée en continu sur la période étant supérieure à un seuil paramétrable ;
- 20 (±4)% en l'espace de 10 secondes en réponse à la détection d'une force d'intensité croissante appliquée en continu sur la période, ladite force appliquée sur la période étant supérieure audit seuil paramétrable et présentant une augmentation de son intensité comprise entre au moins 5% et au moins 40%, de préférence une augmentation de son intensité d'au moins 30%;
- 29 (±4)% en l'espace de 20 secondes en réponse à la détection d'une force d'intensité croissante appliquée en continu sur la période, ladite force appliquée sur la période étant supérieure audit seuil paramétrable et présentant une augmentation de son intensité comprise entre au moins 40% et au moins 80%, de préférence une augmentation de son intensité d'au moins 60% ;
- 38 (±4)% en l'espace de plus de 20 secondes en réponse à la détection d'une force d'intensité croissante appliquée en continu sur la période, ladite force appliquée en continu sur la période étant supérieure audit seuil paramétrable et présentant une augmentation de son intensité comprise entre au moins 80% et au moins 150%, de préférence une augmentation de son intensité d'au moins 100%.

8. Simulateur selon la revendication 5 ou 7, dans lequel ledit seuil paramétrable correspond à une pression exercée au niveau du capteur d'effort (13) qui est supérieure ou égale à 10 N/cm², de préférence supérieure ou égale à 20 N/cm² et, de manière particulièrement préférée supérieure ou égale à 50 N/cm².

9. Simulateur selon l'une quelconque des revendications 4 à 8 dans lequel les moyens de simulation sont agencés pour simuler un retour à une fréquence cardiaque normale et/ou à une saturation de l'hémoglobine en oxygène normale dès lors qu'aucune force n'est plus appliquée sur le capteur d'effort, de préférence dès lors que la force appliquée est inférieure au seuil paramétrable.

10. Un procédé de mise en oeuvre du simulateur selon l'une quelconque des revendications précédentes,
***caractérisé par le fait* qu'**il comprend les étapes consistant à
- fixer une valeur de référence (102) pour ledit au moins un paramètre physiologique,
- enregistrer la valeur de la mesure effectuée par le capteur d'effort (103),
- incrémenter (105-107) cycliquement ledit paramètre physiologique à partir de ladite valeur de référence en fonction de la mesure effectuée par le capteur d'effort,
- communiquer (109) en temps réel à l'opérateur le paramètre incrémenté, par l'intermédiaire dudit transducteur.

## Patentansprüche

1. Simulator zum Erlernen der endotrachealen Intubation, umfassend:
- ein anatomisches Modell (1), das mindestens eine Mundhöhle (2) mit einer Zunge (4), einer Epiglottis (7) und zugehöriger vallecula epiglottica (8) wiedergibt,
- ein Simulationssystem (15), in der Lage, mindestens einen physiologischen Parameter eines Patienten, der eine endotracheale Intubation erfährt, in Abhängigkeit von Daten zu bestimmen, die am Eingang des genannten Systems anliegen und diesen Parameter in Echtzeit über einen Messwandler (15) einem Benutzer mitzuteilen, der am genannten anatomischen Modell eine endotracheale Intubation vornimmt,
**dadurch gekennzeichnet, dass** er umfasst:
- mindestens einen Belastungssensor (13), der im Bereich der Vallecula epiglottica am Modell derart angeordnet ist, dass er die Kraft misst, die in diesem Bereich durch den Spatel (11) eines Laryngoskops (12) ausgeübt wird, das der Benutzer verwendet, und
- Übertragungsmittel (14), um das Ergebnis der vom genannten Belastungssensor ausgeführten Messung dem Eingang des genannten Simulationssystems zuzuführen,
und dadurch, dass das Simulationssystem derart eingerichtet ist, das genannte Ergebnis der vom Belastungssensor ausgeführten Messung zu berücksichtigen, um den genannten physiologischen Parameter zu bestimmen.

2. Simulator nach Patentanspruch 1, in dem das anatomische Modell (1) ein Kind wiedergibt; vorzugsweise gibt das anatomische Modell (1) einen Säugling wieder.

3. Simulator nach irgendeinem der Patentansprüche 1 oder 2, in dem das Simulationssystem derart eingerichtet ist, dass es die Dauer berücksichtigt, während derer die Kraft ausgeübt wird, und/oder die Stärke der ausgeübten Kraft.

4. Simulator nach Patentanspruch 3, in dem der genannte mindestens eine biologische Parameter der Herzfrequenz entspricht und die Simulationsmittel derart eingerichtet sind, dass sie eine Verringerung der genannten Herzfrequenz in Abhängigkeit von der Dauer simulieren, während derer die Kraft ausgeübt wird, und/oder von der Stärke der ausgeübten Kraft, wobei das Erreichen einer Herzfrequenz gleich Null das Ende der Simulation bedeutet.

5. Simulator nach dem vorangehenden Patentanspruch, in dem die Simulationsmittel dafür eingerichtet sind, eine zunehmende Verringerung der Herzfrequenz um
- 10 Perioden pro Minute über 30 Sekunden als Reaktion auf die Feststellung einer dauernd über den Zeitraum ausgeübten Kraft zu simulieren, wobei die dauernd über den Zeitraum ausgeübte Kraft einen festlegbaren Schwellenwert überschreitet;
- 35 Perioden pro Minute über 10 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 5% und mindestens 40% zeigt, vorzugsweise eine Erhöhung ihrer Stärke um mindestens 30%;
- 55 Perioden pro Minute über 20 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 40% und mindestens 80% zeigt, vorzugsweise eine Erhöhung ihrer Stärke um mindestens 60%;
- 75 Perioden pro Minute über 20 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 80% und mindestens 150% zeigt, vorzugsweise eine Erhöhung ihrer Stärke um mindestens 100%.

6. Simulator nach Patentanspruch 3, in dem der genannte mindestens eine biologische Parameter der Sauerstoffsättigung des Hämoglobins des genannten Patienten entspricht und die Simulationsmittel derart eingerichtet sind, dass sie eine Verringerung der Sauerstoffsättigung des Hämoglobins in Abhängigkeit von der Dauer simulieren, während derer die Kraft ausgeübt wird und/oder von der Stärke der ausgeübten Kraft, wobei das Erreichen einer Sauerstoffsättigung des Hämoglobins gleich Null das Ende der Simulation bedeutet.

7. Simulator nach dem vorangehenden Patentanspruch, in dem die Simulationsmittel dafür eingerichtet sind, eine zunehmende Verringerung der Sauerstoffsättigung des Hämoglobins um
- 6% über 30 Sekunden als Reaktion auf die Feststellung einer dauernd über den Zeitraum ausgeübten Kraft zu simulieren, wobei die dauernd über den Zeitraum ausgeübte Kraft einen festlegbaren Schwellenwert überschreitet;
- 20(± 4)% über 10 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 5% und mindestens 40% zeigt, vorzugsweise eine Erhöhung ihrer Stärke um mindestens 30%;
- 29(± 4)% über 20 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 40% und mindestens 80% zeigt, vorzugsweise eine Erhöhung ihrer Stärke um mindestens 60%;
- 38(± 4)% über mehr als 20 Sekunden als Reaktion auf die Feststellung einer dauernd über den Zeitraum ausgeübten Kraft zunehmender Stärke, wobei die genannte über den Zeitraum ausgeübte Kraft den genannten festlegbaren Schwellenwert überschreitet und eine Erhöhung ihrer Stärke zwischen mindestens 80% und mindestens 150% zeigt, vorzugsweise eine Erhöhung ihrer Stärke um mindestens 100%.

8. Simulator nach Patentanspruch 5 oder 7, in dem der genannte festlegbare Schwellenwert einem im Bereich des Belastungssensors (13) ausgeübten Druck größer oder gleich 10 N/cm² entspricht, vorzugsweise größer oder gleich 20 N/cm² und insbesondere bevorzugt größer oder gleich 50 N/cm².

9. Simulator nach irgendeinem der Patentansprüche 4 bis 8, in dem die Simulationsmittel dafür eingerichtet sind, eine Rückkehr zu einer normalen Herzfrequenz und/oder einer normalen Sauerstoffsättigung des Hämoglobins zu simulieren, sobald keinerlei Kraft mehr auf den Belastungssensor ausgeübt wird, vorzugsweise sobald die ausgeübte Kraft den festlegbaren Schwellenwert unterschreitet.

10. Verfahren zur Anwendung des Simulators nach irgendeinem der vorangehenden Patentansprüche,
**dadurch gekennzeichnet, dass** es die folgenden Schritte umfasst:
- Festlegen eines Bezugswertes (102) für den genannten mindestens einen physiologischen Parameter,
- Speicherung des Ergebnisses der durch den Belastungssensor (103) ausgeführten Messung,
- periodische Erhöhung (105-107) des genannten physiologischen Parameters ausgehend vom genannten Bezugswert in Abhängigkeit von der durch den Belastungssensor ausgeführten Messung,
- Mitteilung (109) des erhöhten Parameters an den Benutzer in Echtzeit mit Hilfe des genannten Messwandlers.

## Claims

1. Simulator intended for learning tracheal intubation comprising
- an anatomic dummy element (1) reproducing at least one buccal cavity (2) provided with a tongue (4), an epiglottis (7) and the corresponding glossoepiglottic vallecula (8),
- a simulation system (15) capable of determining at least one physiological parameter of a patient subject to tracheal intubation depending on data provided at the input of said system and of communicating this parameter in real time via a transducer (15), to an operator practicing tracheal intubation on said anatomic dummy element,
***characterized by the fact*** that it comprises
- at least one force sensor (13) positioned on the dummy element at the glossoepiglottic vallecula so as to measure the force applied at this level by the blade (11) of a laryngoscope (12) handled by the operator, and
- transmission means (14) for providing the value of the measurement conducted with said force sensor at the input of said simulation system,
***and by the fact*** that the simulation system is laid out for taking into account said value of the measurement conducted with the force sensor in order to determine said physiological parameter.

2. Simulator according to claim 1, wherein the anatomic dummy element (1) reproduces a child, preferably the anatomic dummy element (1) reproduces an infant.

3. Simulator according to any one of claims 1 or 2, wherein the simulation system is laid out for taking into account the duration during which the force is applied and/or the intensity of the applied force.

4. Simulator according to claim 3, wherein said at least one biological parameter corresponds to the heart rate and the simulation means are laid out for simulating a decrease in said heart rate depending on the duration during which the force is applied and/or on the intensity of the applied force; obtaining a zero heart rate marking the end of the simulation.

5. Simulator according to the preceding claim, wherein the simulation means are laid out for simulating a gradual decrease in the heart rate by:
- 10 cycles per minute within 30 seconds in response to the detection of a continuously applied force over the period, said continuously applied force over the period being greater than a parameterizable threshold;
- 35 cycles per minute within 10 seconds in response to detection of a force within increasing intensity continuously applied over the period, said applied force over the period being greater than said parameterizable threshold and having an increase in its intensity comprised between at least 5% and at least 40%, preferably an increase in its intensity by at least 30%;
- 55 cycles per minute within 20 seconds in response to the detection of a force with increasing intensity continuously applied over the period, said applied force over the period being greater than said parameterizable threshold and having an increase in its intensity comprised between at least 40% and at least 80%, preferably an increase in its intensity by at least 60%;
- 75 cycles per minute within more than 20 seconds in response to the detection of a force with increasing intensity continuously applied over the period, said continuously applied force over the period being greater than said parameterizable threshold and having an increase in its intensity comprised between at least 80% and at least 150%, preferably an increase in its intensity by at least 100%.

6. Simulator according to claim 3, wherein said at least one biological parameter corresponds to the oxygen saturation of hemoglobin of said patient and the simulation means are laid out for simulating a decrease in the oxygen saturation of hemoglobin depending on the duration during which the force is applied and/or on the intensity of the applied force; obtaining a zero oxygen saturation of hemoglobin marking the end of the simulation.

7. Simulator according to the preceding claim, wherein the simulation means are laid out for simulating a gradual decrease in the oxygen saturation of hemoglobin by:
- 6% within 30 seconds in response to the detection of a force continuously applied over the period, said continuously applied force over the period being greater than a parameterizable threshold;
- 20 (±4)% within 10 seconds in response to the detection of a force with increasing intensity, continuously applied over the period, said applied force over the period being greater than said parameterizable threshold and having an increase in its intensity comprised between at least 5% and at least 40%, preferably an increase in its intensity by at least 30%;
- 29 (±4)% within 20 seconds in response to the detection of a force with increasing intensity continuously applied over the period, said applied force over the period being greater than said parameterizable threshold and having an increase its intensity comprised between at least 40% and at least 80%, preferably an increase in its intensity by at least 60%;
- 38 (±4)% within more than 20 seconds in response to the detection of a force with increasing intensity continuously applied over the period, said continuously applied force over the period being greater than said parameterizable threshold and having an increase in its intensity comprised between at least 80% and at least 150%, preferably an increase in its intensity by at least 100%.

8. Simulator according to claim 5 or 7, wherein said parameterizable threshold corresponds to a pressure exerted at the force sensor (13) which is greater than or equal to 10 N/cm², preferably greater than or equal to 20 N/cm² and, more preferably, greater than or equal to 50 N/cm².

9. Simulator according to any of claims 4 to 8, wherein the simulation means are laid out for simulating return to a normal heart rate and/or to normal oxygen saturation of hemoglobin from the moment when a force is no longer applied on the force sensor, preferably from the moment when the applied force is less than the parameterizable threshold.

10. A method for applying the simulator according to any of the preceding claims,
***Characterised by the fact*** that it comprises the steps of
- Setting a reference value (102) for said at least one physiological parameter,
- Recording the value of the measurement conducted with the force sensor (103),
- Cyclically incrementing (105-107) said physiological parameter from said reference value depending on the measurements conducted with the force sensor,
- communicating (109) in real time to the operator, the incremented parameter, via said transducer.
